# EUROPEAN PATENT APPLICATION

(11) **EP 3 493 295 A1**
(43) Date of publication of application: **05.06.2019**
(21) Application number: 18180778.5
(22) Date of filing: 29.06.2018
(51) Int. Cl.: H01M 2/12, H01M 10/12

(54) **BATTERY**

(30) Priority: 04.12.2017 JP 2017232611
(71) Applicant: Kabushiki Kaisha Toshiba, Tokyo 105-0023 (JP); Toshiba Infrastructure Systems & Solutions Corporation, Kawasaki-shi, Kanagawa 212-0013 (JP)
(72) Inventor: Ogawa, Takaya, Kanagawa, 212-0013 (JP); Hino, Keitaro, Kanagawa, 212-0013 (JP); Fujisawa, Tadashi, Kanagawa, 212-0013 (JP); Aikawa, Shinya, Kanagawa, 212-0013 (JP); Asai, Hiroaki, Kanagawa, 2012-0001 (JP)
(74) Representative: Hoffmann Eitle

(57) **Abstract**

According to an embodiment, a battery (11A) includes: a battery case (11) ; a gas discharge portion (25) for gas venting formed in the battery case (11); a battery module (15) housed in the battery case (11), the battery module (15) being an aggregation of a plurality of battery cells (14); a pressure relief portion (16) formed in a part of the battery cell (14) and allowing a vent gas expelled from an inner portion of the battery cell (14) to flow out; and a vent path structure (26, 41) configuring a vent gas path (33) through which the vent gas flows between the pressure relief portion (16) and the gas discharge portion (25), and a liquid trap portion (34) facilitating liquefaction of the vent gas flowing in the vent gas path (33) and trapping the liquefied liquid.

## Description

### FIELD

Embodiments described herein relate generally to a battery.

### BACKGROUND

In a battery pack, such as a secondary battery, a battery module, which is an aggregation of a plurality of battery cells (electric cells), is housed inside a battery case. During use of the battery pack, there is a possibility that the battery cells inside the case may exhibit thermal runaway due to short circuiting or other reasons.

Assuming such a situation, the battery pack is equipped with a safety mechanism configured to prevent explosion of the battery cells. As an example of this safety mechanism, a pressure relief portion for pressure release is provided in the battery cell. If, for example, a high temperature combustible gas is generated inside the battery cell and an internal pressure of the battery cell increases, the pressure relief portion of the battery cell is operated.

As a safety mechanism, a gas discharge portion for gas venting is also formed in the battery case. A combustible vent gas discharged from the pressure relief portion of the battery cell is discharged to the outside of the battery pack from the gas discharge portion of the battery case. At this time, the vent gas discharged from the pressure relief portion is a high temperature combustible gas. Accordingly, unless the gas is discharged to the outside of the battery pack safely, there is a possibility that the battery case of the battery pack may explode or ignite even if the explosion of the battery cell can be prevented.

### BRIEF DESCRIPTION OF THE DRAWINGS

FIG. 1 is a perspective view depicting a general configuration of an entire battery according to an embodiment.
FIG. 2 is an exploded perspective view of the battery of FIG. 1.
FIG. 3 is a longitudinal cross sectional view depicting a vent path structure of an inner portion of the battery of FIG. 1.
FIG. 4 is a perspective view depicting the vent path structure of FIG. 3.
FIG. 5 is a perspective view depicting a reverse side of a case of the vent path structure of FIG. 4.
FIG. 6 is a perspective view depicting a modification of a vent path structure of a battery.

### DETAILED DESCRIPTION

According to an embodiment, a battery includes: a battery case, an inner portion of which is sealed; a gas discharge portion for gas venting formed in the battery case; a battery module housed in the battery case, the battery module being an aggregation of a plurality of battery cells; a pressure relief portion formed in a part of the battery cell and allowing a vent gas expelled from an inner portion of the battery cell to flow out; and a vent path structure configuring a vent gas path through which the vent gas flows between the pressure relief portion and the gas discharge portion, and a liquid trap portion facilitating liquefaction of the vent gas flowing in the vent gas path and trapping the liquefied liquid.

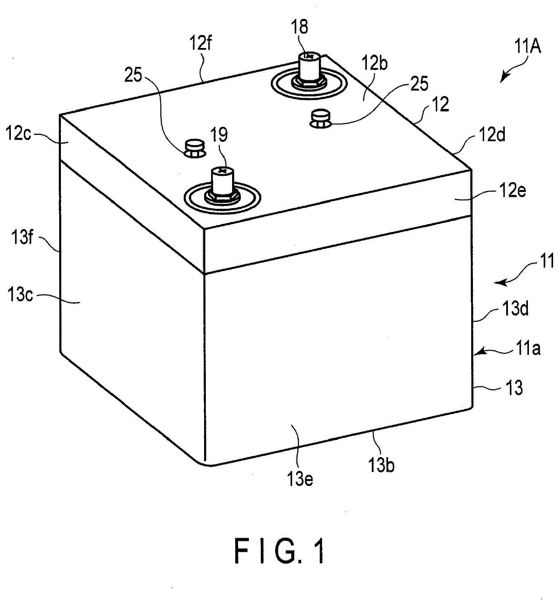

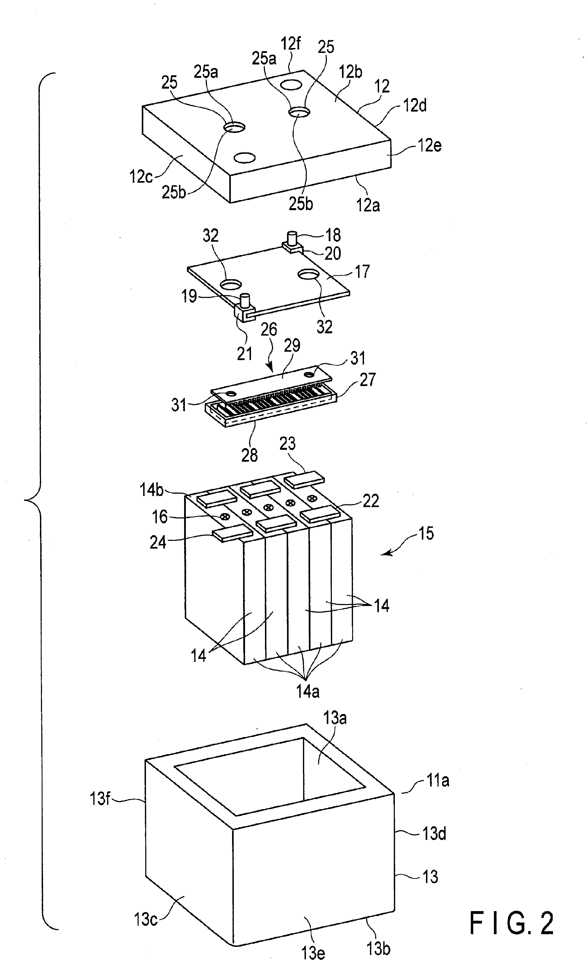

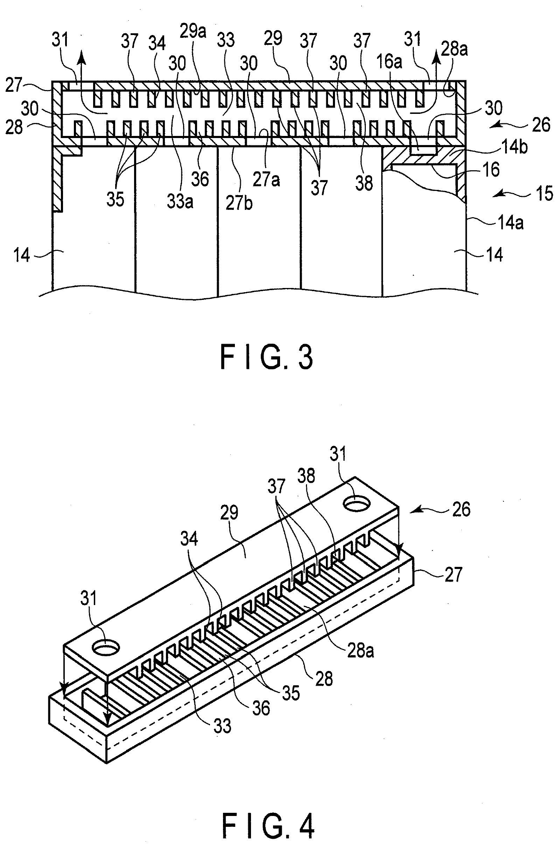

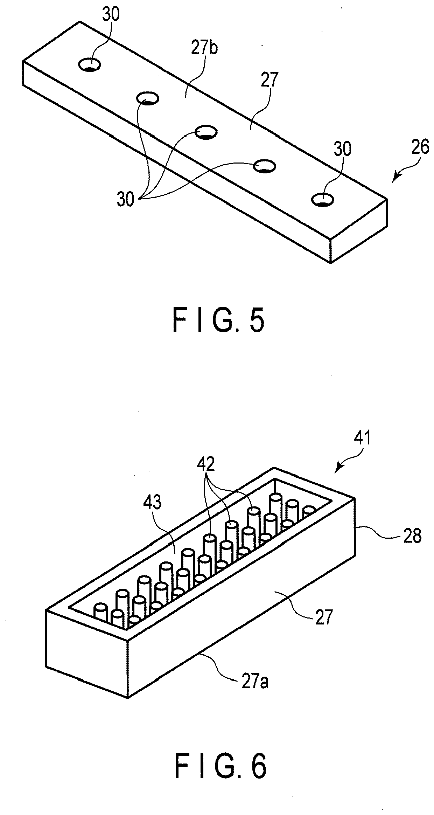

Hereinafter, an embodiment will be explained with reference to FIGS. 1-5. FIG. 1 is a perspective view depicting a general configuration of the entire battery 11A according to an embodiment. FIG. 2 is an exploded perspective view of the battery 11A of FIG. 1. FIG. 3 is a longitudinal sectional view depicting a vent path structure 26 of an inner portion of the battery 11A of FIG. 1. FIG. 4 is a perspective view depicting the vent path structure 26 of FIG. 3. FIG. 5 is a perspective view depicting a lower surface 27b, which is a reverse side of a case 27 of the vent path structure of FIG. 4.

The battery 11A of the present embodiment comprises a battery case 11, a vent gas release portion (gas discharge portion) 25, a battery module 15, a pressure relief portion 16 that is a safety valve, and a vent path structure 26.

The battery case 11 comprises an upper case 12 and a lower case 13. As shown in FIG. 2, the lower case 13 is a housing shaped like a rectangular box in which an upper surface opening 13a is formed. This lower case 13 comprises a bottom plate 13b shaped like a rectangular flat plate, and side wall portions 13c, 13d, 13e, and 13f providing four surfaces including a front surface, a rear surface, a right surface, and a left surface.

Inside the lower case 13, the battery module 15, which is an aggregation of a plurality of battery cells 14, is housed as shown in FIG. 2. In the present embodiment, an example of the battery module 15, in which five battery cells 14 are arranged in juxtaposition, is indicated.

The battery cells 14 have, for example, a housing 14a such as an approximately rectangular parallelepiped cell can configured by a metal container such as aluminum, or laminate film. Inside the housing 14a, for example, an electrode main body (coil) (not shown) that is spirally wound, an electrolyte solution, etc. are housed.

On a top plate 14b of the housing 14a, a pair of cell terminals, and the pressure relief portion 16 that is a safety valve, are arranged. The cell terminals of the adjacent battery cells 14 are connected by a bus bar 22. In the present embodiment, the cell terminals of the five battery cells 14 are connected in series by four bus bars 22.

A positive electrode cell terminal 23 is connected to a cell terminal of one battery cell 14 arranged on the outer side. A negative electrode cell terminal 24 is respectively connected to a cell terminal of the other battery cell 14 arranged on the outer side.

The pressure relief portion 16 is a thin-walled portion 16a, which is a part of the top plate 14b of the housing 14a that is formed thinner in thickness than the other parts, as shown in FIG. 3. In other words, the pressure relief portion 16 is a fragile portion formed on a part of the top plate 14b. In the present embodiment, the pressure relief portion 16 is formed into a shape in which a part of the top surface of the top plate 14b is dented with respect to that which surrounds it.

The thin-walled portion 16a is formed by, for example, a cross-shaped groove in which a plurality of linear grooves are arranged in a cross shape on a surface of the top plate 14b. Note that the thin-walled portion 16a may be provided on the reverse side of the top plate 14b, or may be provided on both surfaces of the top plate 14b.

This pressure relief portion 16 releases inside the space of the battery cell 14 by the thin-walled portion 16a rupturing if the internal pressure of the housing 14a exceeds a preset pressure to let the internal vent gas of the battery cell 14 to flow out.

The upper case 12 is a housing which is shaped like a rectangular box and in which a lower surface opening 12a is formed. This upper case 12 comprises a top plate portion 12b, and side wall portions 12c, 12d, 12e, and 12f configuring four surfaces including a front surface, a rear surface, a right surface, and a left surface.

Then, in a state where an upper end portion of the lower case 13 (an end portion on the upper surface opening 13a side) and a lower end portion of the upper case 12 (an end portion on the lower surface opening 12a side) are abutted, the upper case 12 and the lower case 13 are fixed by a screw (not shown) . Thereby, the upper case 12 and the lower case 13 are joined. At this time, in between the lower case 13 and the upper case 12 is sealed by a packing (not shown) . Thus, the inner portion of the battery case 11 is sealed.

The upper case 12 is provided with the upper plate portion 12b with a hole through which a positive electrode terminal 18 is inserted, a hole through which a negative electrode terminal 19 is inserted, two vent gas release portions 25, etc. The vent gas release portion 25 comprises a hole 25a formed on the upper case 12, and a waterproof vent filter 25b provided in the hole 25a to allow the air inside the battery case 11 and the air outside the battery case 11 to flow out from and into the battery case 11, respectively, while keeping the inside of the battery case 11 water tight.

This waterproof vent filter 25b comprises, for example, a porous PTFE film. Then, the vent gas release portion 25 is configured, when the internal pressure of the battery case 11 changes as a result of a change in surrounding atmospheric pressure, a rise in temperature, etc., to allow the air inside the battery case 11 and the air outside the battery case 11 to flow out from and into (be exchanged) the battery case 11, with the battery case 11 kept water tight. This inhibits a possible difference in pressure between the inside and outside of the battery case 11.

In addition, the vent path structure 26, a control substrate 17, other structural members, etc. are arranged on an upper side of the battery module 15. A positive electrode tab 20 and a negative electrode tab 21 of the battery module 15 are connected to the control substrate 17. A positive electrode terminal 18 is connected to an upper end portion of the positive electrode tab 20. The positive electrode cell terminal 23 of the battery module 15 is connected to a lower end portion of the positive electrode tab 20. A negative electrode terminal 19 is connected to an upper end portion of the negative electrode tab 21. The negative electrode cell terminal 24 of the battery module 15 is connected to a lower end portion of the negative electrode tab 21.

In addition, the vent path structure 26 is formed by the case 27 arranged on an upper side of the battery module 15, as shown in FIG. 3. This case 27 comprises a lower side member 28 on an upper surface of which the upper surface opening 28a is formed, and a plate-like upper side member 29 that becomes a lid to seal the upper surface opening 28a, as shown in FIG. 4. The lower side member 28 and upper side member 29 are formed by, for example, an insulator, such as resin.

The lower side member 28 comprises approximately the same length as that of the five battery cells 14 of the battery module 15 in a juxtaposition direction. As shown in FIG. 5, five communicating holes 30 are formed on a bottom surface 27a of the lower side member 28. Each of the five communicating holes 30 is communicating with each pressure relief portion 16 of the five battery cells 14. Note that the bottom surface 27a is a lower surface of an internal space of the case 27.

To explain specifically, in the present embodiment, the pressure relief portion 16 is configured by a part of an upper surface of the top plate portion 14b being formed into a dented shape with respect to that which surrounds it. A communicating hole 30 is opposed to the pressure relief portion 16, and a peripheral portion of the communicating hole 30 is in contact with and sealed by a peripheral portion of the pressure relief portion 16, and thereby the pressure relief portion 16 and the communicating hole 30 are communicated. Note that the lower side member 28 is fixed to the battery module 15 by a fixing means, such as an adhesive or fixing member, in a state where the lower surface 27b of the lower side member 28 is in contact with an upper surface of the battery module 15.

In the upper side member 29, the communicating hole 31 is formed at a position corresponding to each of the two vent gas release portions 25 of the upper case 12. Note that in the present embodiment, the corresponding position is, as an example, an opposed position with the control substrate 17 therebetween.

The control substrate 17 is arranged on the upper surface of the upper side member 29. Furthermore, two intermediate communicating holes 32 are formed in the control substrate 17. The intermediate communicating holes 32 penetrate the control substrate 17 in its thickness direction. One intermediate communicating hole 32 is communicated to one communicating hole 31 and the hole 25b of one vent gas release portion 25. The other intermediate communicating hole 32 is communicated to the other communicating hole 31 and the hole 25b of the other vent gas release portion 25.

To explain specifically, on the lower surface of the control substrate 17, a peripheral portion of the intermediate communicating hole 32 and a peripheral portion of the communicating hole 31 are in contact with each other so as to be sealed therebetween, and the intermediate communicating hole 32 is communicated to the communicating hole 31. On the upper surface of the control substrate 17, the peripheral portion of the intermediate communicating hole 32 and the peripheral portion of the hole 25b of the vent gas release portion 25 are in contact with each other so as to be sealed therebetween, and the intermediate communicating hole 32 is communicated to the hole 25b.

Thereby, the vent gas path 33, through which a vent gas flows between the pressure relief portion 16 and the vent gas release portion 25 by an internal space of the case 27 and the intermediate communicating hole 32 of the control substrate 17, is formed. Then, a part of the vent gas path 33 is surrounded by the case 27. The vent gas path 33 is provided extended in a direction orthogonal to the gravity direction.

Furthermore, the vent path structure 26 comprises a liquid trap portion 34 which facilitates liquefaction of the vent gas flowing inside the vent gas path 33. The liquid trap portion 34 traps the liquefied liquid. Herein, on the bottom surface 27a of the lower side member 28, a plurality of fine convex portions 35 protruding upward, and a first heat sink portion 36 in which concave portions between adjacent convex portions 35 are aligned in a direction in which a plurality of battery cells 14 are aligned, are formed.

A plurality of convex portions 35 are configured by, for example, fixing another plate-like member to the lower side member 28 by a fixing means, such as an adhesive agent. Note that the convex portions 35 may be formed integrally with the lower side member 28. Each of a plurality of convex portions 35 is, for example, formed into a rectangular plate shape extending from one inner side surface to the other inner side surface along a direction in which the battery cells 14 are aligned. An upper end of the plurality of convex portions 35 are disposed on the same plane. Namely, the height of each of a plurality of convex portions 35 with respect to the bottom surface 27a is the same. The height of a plurality of convex portions 35 is set to configure a main path 33a between with a lower end of a convex portion 37, to be described later, of the upper side member 29. Note that a concave portion between two convex portions 35 communicates with the main path 33a. The main path 33a extends in a direction orthogonal to a direction in which the gravity is applied in a state where the batteries 14 are installed.

In addition, on the upper side member 29, a plurality of fine convex portions 37 protruding downward in an inner surface 29a (a lower surface in FIG. 3), and a second heat sink portion 38, in which concave portions between adjacent convex portions 37 are aligned in a direction in which a plurality of battery cells 14 are aligned, are formed.

A plurality of convex portions 37 may be, for example, configured by fixing another plate-like member to the upper side member 29 by a fixing means, such as an adhesive agent. Note that the convex portion 37 may be formed integrally with the upper side member 29. Each of a plurality of convex portions 37 is, for example, formed into a rectangular plate shape extending from one edge to the other edge along a direction in which the battery cells 14 are aligned. Lower ends of a plurality of convex portions 37 are arranged on the same plane. Concave portions between two adjacent convex portions 37 communicate with the main path 33a.

In the first heat sink portion 36 of the lower side member 28, a space between two adjacent convex portions 35 is set to generate capillarity. In other words, the width of a concave portion between the adjacent convex portions 35 is set to generate capillarity. In the second heat sink portion 38 of the upper side member 29, a space of two adjacent convex portions 37 is set to generate capillarity. In other words, the width of a concave portion between the adjacent convex portions 37 is set to generate capillarity. Then, in the present embodiment, the liquid trap portion 34 is formed by the first heat sink portion 36 of the lower side member 28 and the second heat sink portion 38 of the upper side member 29.

In the present embodiment, a suitable space is formed between the first heat sink portion 36 of the lower side member 28 and the second heat sink portion 38 of the upper side member 29. This space configures the main path 33a.

Next, a working effect of the battery 11A of the present embodiment with the above configuration will be described. At the time of an abnormality of the battery 11A of the present embodiment, for example, if a high temperature combustible gas is generated in the inner portion of the battery cell 14 due to thermal runway of the battery cell 14 and an internal pressure of the battery cell 14 increases, the pressure relief portion 16 of the battery cell 14 operates.

Namely, the pressure relief portion 16 is set in advance so that the thin-walled portion 16a will be cut if the internal pressure of the housing 14a becomes a set pressure or higher. Thereby, a vent gas expelled from the inner portion of the battery cell 14 is allowed to flow out through a slit of the thin-walled portion 16a.

At this time, a combustible vent gas released from the pressure relief portion 16 of the battery cell 14 flows into the vent path structure 26 through the communicating hole 30. The vent gas that has flowed into the vent path structure 26 passes the vent gas path 33 which is an internal space of the case 27, and flows in a direction orthogonal to the gravity direction. Then, as shown by an arrow in FIG. 3, via two communicating holes 31 of the upper side member 29, the intermediate communicating holes 32 of the control substrate 17, and the two vent gas release portions 25 of the upper case 12, the vent gas sequentially flows to the outside of the battery case 11.

The vent gas in the vent path structure 26 flows in a mist form (a steam-like state). At this time, the first heat sink portion 36 of the lower side member 28 and the second heat sink portion 38 of the upper side member 29 have large surface areas, and thus have a high heat transfer coefficient. Accordingly, in the present embodiment, by the vent gas coming in contact with the first heat sink portion 36 of the lower side member 28 and the second heat sink portion 38 of the upper side member 29, in which fine successive convex and concave capillarity is generated, cooling of the vent gas is facilitated, which can make it easy to liquefy the vent gas.

Furthermore, the vent gas that was cooled and liquefied in the vent gas path 33 can be stored in each concave portion of the first heat sink portion 36 of the lower side member 28 and each concave portion of the upper side member 29 by capillarity.

At this time, an amount of liquid of the vent gas to be liquefied is small, and by overcoming the gravity and a flow rate of the vent gas, the vent gas can be trapped in each concave portion of the first heat sink portion 36 of the lower side member 28, and each concave portion of the second heat sink portion 38 of the upper side member 29 by capillarity.

This can avoid improper flow of the vent gas that was liquefied in the inner portion of the battery case 11, and blocks a narrow portion on the vent gas path 33, for example, a surrounding portion of a slit of the thin-walled portion 16a of the battery cell 14 and a surrounding portion of the two communicating holes 31 of the upper side member 29.

In addition, the communicating holes 30, communicating with each pressure relief portion 16 of the five battery cells 14 of the battery module 15, are formed in the lower side member 28 of the vent path structure 26. Furthermore, the communicating holes 31, communicating with the two vent gas release portions 25 of the upper case 12, are formed in the upper side member 29 of the vent path structure 26. Accordingly, the vent gas is first liquefied in the surroundings of the communicating hole 30 on the upstream side of the vent gas path 33 so that the volume of the vent gas flow can be reduced. Thereby, an internal pressure and a gas flow rate of the vent gas flowing in the inner portion of the vent gas path 33 can be lowered so as to make it easy to trap the liquefied vent gas.

Furthermore, the liquid trap portion 34 is provided in the upstream vent gas path 33 of a narrow location and a complex location (a bent location, a location where a cross-sectional area is not successive, and a location where a liquid pool is likely to be generated due to an effect of gravity) of the path through which the gas flows like the two vent gas release portions 25 of the upper case 12. Thus, flowing of the vent gas that is liquefied into the two vent gas release portions 25 can be suppressed.

In addition, a plurality of convex portions 35 of the first heat sink portion 36 of the lower side member 28 consisting of the liquid trap portion 34, and a plurality of convex portions 37 of the second heat sink portion 38 of the upper side member 29, are configured into a shape protruding in a direction orthogonal to a direction in which the vent gas flowing in the inner portion of the vent gas path 33 flows. Accordingly, the liquid trapping power can be improved. Note that the liquid trapping power can also be improved by arranging the liquid trap portion 34 vertically to the gravity direction. Specifically, the plurality of convex portions 35 and the plurality of convex portions 37 protrude in a direction orthogonal to the gravity direction. An example is a configuration in which the case 27 shown in FIG. 4 is rotated by 90 degrees.

The battery 11A of the present embodiment with the above configuration brings about the following effects. By providing the first heat sink portion 36 of the lower side member 28 and the second heat sink portion 38 of the upper side member 29 in a large place of the vent gas path 33, cooling of the vent gas can be facilitated when liquefying.

Furthermore, at the same time as liquefaction of the vent gas, the vent gas that is liquefied is stored among a plurality of convex portions 35 of the first heat sink portion 36 of the lower side member 28 and among a plurality of convex portions 37 of the second heat sink portion 38 of the upper side member 29 by capillarity. Thereby, improper flow of the vent gas that is liquefied in the inner portion of the vent gas path 33 and blocking a narrow portion on the vent gas path 33 can be avoided.

Thus, in the battery 11A of the present embodiment, at the time of abnormality of the battery, in a case where a high temperature vent gas is expelled from the battery cell 14 of the battery 11A, the vent gas can be safely and smoothly released to the outside of the battery case 11 of the battery 11A.

FIG. 6 shows the lower side member 28 of the vent path structure 41, which is a modification of the vent path structure 26 of the battery 11A of the above embodiment. Note that in FIG. 6, the identical portions as those of FIGS. 1-5 are denoted as the identical reference signs and explanation thereof will be omitted. The upper side member 29 may be the same as that explained with reference to FIGS. 1-5.

In the vent path structure 41 of the present modification, a first heat sink portion 43 is formed having a plurality of fine convex portions 42 that are formed into a pin-fin shape protruding upward on a lower surface (a bottom surface 27a) of the case 27 of the lower side member 28. In other words, a plurality of convex portions 42 are formed instead of a plurality of convex portions 35. In FIG. 6, the first heat sink portion 43 of the lower side member 28 is indicated, but a second heat sink portion having a plurality of fine convex portions 42 formed into a pin-fin shape may of course be formed instead of a plurality of convex portions 37. In this case as well, the main path 33a is formed between the first heat sink portion and the second heat sink portion.

In the vent path structure 41 of the present modification, the liquid trap portion 34, which facilitates liquefaction of the vent gas flowing in the vent gas path 33 by a plurality of fine convex portions 42 formed into a pin-fin shape and traps the vent gas which is liquefied, can be configured. Thus, in the present modification, the same effect as that of the vent path structure 26 of the battery 11A of the above embodiment can be obtained.

Alternatively, the pin-fin shaped convex portion 42 may be formed only in the lower side member 28, and the upper side member 29 may be formed into a plate-like shape. In this case, the convex portion 42 may have a height such that its upper end comes in contact with the upper side member 29. In this case, a space between the convex portions 42 is set so that the vent gas can flow and capillarity is not generated. In this case, it is possible to facilitate the liquefaction of the vent gas, but is not possible to trap liquid between the convex portions 42.

In the present embodiment, the vent path is configured by the case 27 and the control substrate 17. However, the vent path may be configured only by the case 27. In this case, the intermediate communicating hole 31 formed in the upper side member 29 of the case 27 communicates with the hole 25b of the vent gas release portion 25 not via the control substrate 17. In this case, for example, a peripheral portion of the intermediate communicating hole 31 of the upper side member 29 is abutted to a peripheral portion of the hole 25b of the upper case 12.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

## Claims

1. A battery **characterized by** comprising: a battery case (11), an inner portion of which is sealed;
a gas discharge portion (25) for gas venting formed in the battery case (11);
a battery module (15) housed in the battery case (11), the battery module (15) being an aggregation of a plurality of battery cells (14);
a pressure relief portion (16) formed in a part of the battery cell (14) and allowing a vent gas expelled from an inner portion of the battery cell (14) to flow out; and
a vent path structure (26, 41) configuring a vent gas path (33) through which the vent gas flows between the pressure relief portion (16) and the gas discharge portion (25), and a liquid trap portion (34) facilitating liquefaction of the vent gas flowing in the vent gas path (33) and trapping the liquefied liquid.

2. The battery according to claim 1, **characterized in that** the vent path structure (26, 41) comprises a case (27) provided between the pressure relief portion (16) and the gas discharge portion (25), and
the vent gas path (33) is provided extended in a direction orthogonal to a gravity direction in an inner portion of the case (27).

3. The battery according to claim 2, **characterized in that** the case (27) comprises a lower side member (28) on an upper surface of which an upper surface opening (28a) is formed, and a lid-shaped upper side member (29) closing the upper surface opening (28a),
in the lower side member (28), a communicating hole (30) communicating with the pressure relief portion (16) of the battery cell (14) is formed, and a plurality of convex portions (35, 42) protruding upward, and a first heat sink portion (36) having a concave portion between adjacent convex portions (35, 42), are formed on a bottom surface facing an inner portion,
in the upper side member (29), a communicating hole (31) communicating with the gas discharge portion (25) is formed, and a plurality of convex portions (37) protruding downward, and a second heat sink portion (38) having a concave portion between adjacent convex portions (37), are formed on a lower surface facing an inner portion, and
a space between two adjacent convex portions (35) among the plurality of convex portions (35) of the first heat sink portion (36), and a space between two adjacent convex portions (37) among the plurality of convex portions (37) of the second heat sink portion (38), are set to generate capillarity.

4. The battery according to claim 3, **characterized in that** each of the plurality of convex portions (42) of the first heat sink portion (36) are formed into a pin-fin shape.

5. The battery according to claim 3 or 4, **characterized in that** each of the plurality of convex portions of the second heat sink are formed into a pin-fin shape.
